# EUROPEAN PATENT SPECIFICATION

(11) **EP 2 132 466 B1**
(45) Date of publication and mention of the grant of the patent: **03.10.2012**
(21) Application number: 08728703.3
(22) Date of filing: 31.01.2008
(51) Int. Cl.: F16K 1/38, G05D 7/01

(54) **APPARATUS TO REGULATE FLUID FLOW**
VORRICHTUNG ZUR STRÖMUNGSREGELUNG
APPAREIL DESTINÉ À RÉGULER L'ÉCOULEMENT D'UN FLUIDE

(30) Priority: 28.02.2007 US 711962
(43) Date of publication of application: 16.12.2009
(73) Proprietor: Tescom Corporation, Elk River, MN 55330 (US)
(72) Inventor: DALTON, James, Matthew, Elk River, MN 55330 (US)
(74) Representative: Bohnenberger, Johannes
(86) International application number: PCT/US2008/052639
(87) International publication number: WO 2008/106266

(56) References cited:
- CH-A- 241 493
- FR-A- 2 225 667
- FR-A- 2 500 186
- GB-A- 709 358
- US-A- 3 233 626
- US-A- 3 906 982
- US-A- 4 051 870
- US-A- 4 249 717
- US-A1- 2003 197 140

## Description

### FIELD OF THE DISCLOSURE

This disclosure relates generally to fluid flow regulators and, more particularly, to apparatus to regulate high pressure fluid flow which includes a valve member deformable to distribute forces to a valve seat.

### BACKGROUND

Industrial processing plants use regulator valves in a wide variety of applications such as, for example, controlling the flow of a gas or fluid in a processing operation. A regulator valve of this type is for example described in FR 2 500 186. The regulation of the flow of gas requires that a regulator valve accommodate a high flow rate of gas at high pressures and maintain the purity of the gas. Thus, a manufacturer of such regulator valves may certify that the valves are free from contamination by particles created or left behind during the manufacture of the valves. However, despite rigorous manufacturing processes to ensure the absence of particle contamination such as, for example, metal filings, regulator valves may experience contamination in the form of particles introduced into the regulator valve during or after manufacture. The presence of contaminants may result in damage to parts of a main orifice (e.g., a seat) of the regulator valve and cause a significant leak to occur.

### SUMMARY

An apparatus to regulate fluid flow comprises a housing having an inlet and an outlet; a valve seat at a valve passage, the valve seat defining a first diameter surface, the first diameter surface having a corner and extending radially outwardly to a larger diameter second surface, wherein the second surface is angled relative to the first diameter surface; and a valve member includes a stem moveable in a first direction by an adjustable resilient member; the valve member movable to engage the valve seat, the valve member having a deformable member arranged to first engage and deform against the corner and the first diameter surface of the valve seat, the deformable member arranged to next engage and deform against the second surface, wherein the deformable member has a surface substantially parallel to the second surface of the valve seat. The apparatus according to the invention is characterized in that the deformable member is disposed between the inlet and the valve seat, and in that the apparatus further comprises a sensor on which is attached the valve stem, the sensor being forced in a second direction opposite to the first direction by the gas pressure at the outlet so that the deformable member is urged against the valve seat with greater force in response to an increase in the pressure at the outlet when the valve passage is partially closed.

### BRIEF DESCRIPTION OF THE DRAWINGS

FIG. 1 is a cut-away illustration of an example fluid flow regulator valve.

FIG. 2 is an enlarged view of the circled portion of FIG. 1.

### DETAILED DESCRIPTION

In general, the example apparatus described herein may be utilized for regulating fluid flow in various types of fluid flow processes. Additionally, while the examples described herein are described in connection with the control of product flow for the industrial processing industry, the examples described herein may be more generally applicable to a variety of process control operations for different purposes.

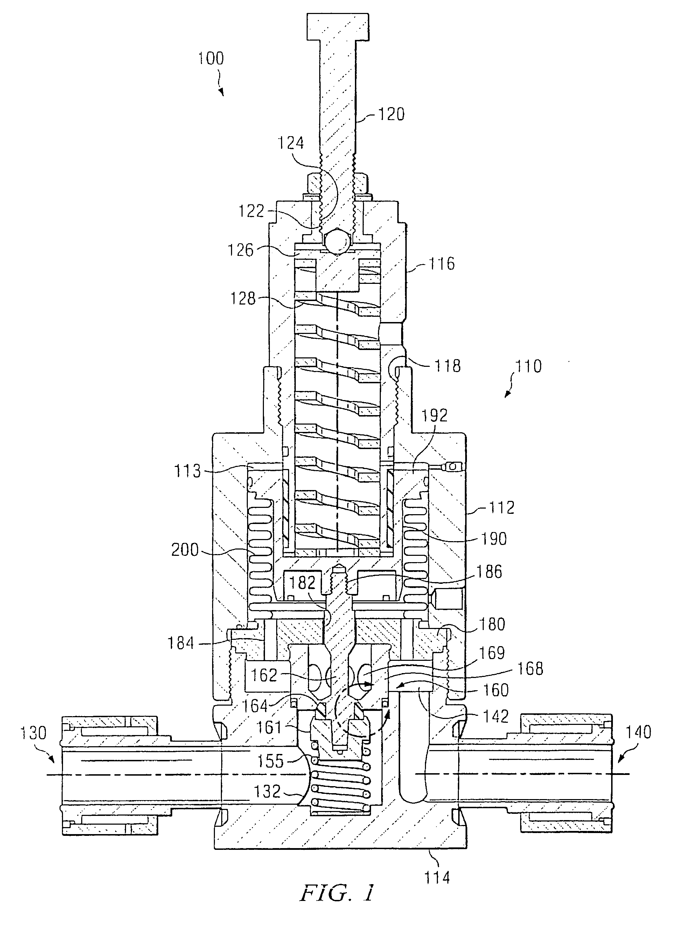

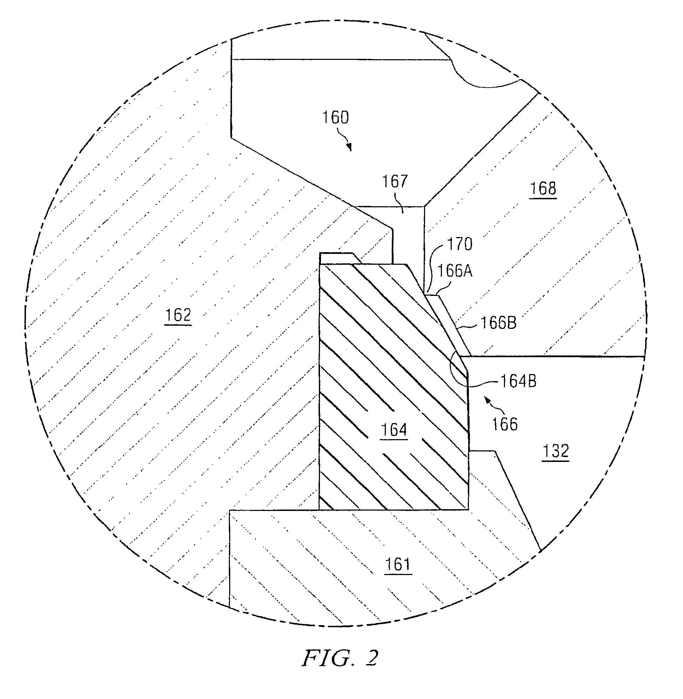

FIG. 1 is a cut-away illustration of an example fluid flow regulator valve 100. The example fluid flow regulator valve 100 includes a body or housing 110 having an upper housing 112 defining a chamber 113, a lower housing 114 defining an inlet chamber 132, and an adjustment housing 116 received by the upper housing 112 at threaded connection 118. An adjustment screw 120 has a threaded end 122 received at threads 124 of the adjustment housing 116. The adjustment screw 120 engages an end member 126 which abuts a resilient member or load spring 128 located within the adjustment housing 116 and the upper housing 112. The lower housing 114 includes an inlet 130 and an outlet 140. The inlet 130 communicates with the inlet chamber 132 in which is located a valve spring 155. A main valve is designated generally by reference numeral 160. The valve spring 155 engages a lower end 161 of a valve stem 162 to urge the valve stem 162 toward the upper housing 112. The valve stem 160 has a deformable valve member 164. As shown most clearly in FIG. 2, the deformable valve member 164 has a generally flat angled surface 164B that engages a valve seat 166 of an orifice or passage 167 disposed at a stem cap 168. As can be readily seen in FIG. 1, the stem cap 168 includes lateral openings 169 to permit fluid flow to a passage 142 communicating with the outlet 140.

Referring to FIG. 1, a valve guide 180 is located between the upper housing 112 and the lower housing 114. The valve guide 180 has a central opening 182 receiving the valve stem 162, and radially outer through openings 184 for fluid flow therethrough. The valve stem 162 extends upwardly to engage threadingly, at threads 186, a movable sensor 190. The movable sensor 190 is located within the chamber 113 of the upper housing 112. A diaphragm 200 extends between a sensor flange 192 and the valve guide 180.

The load spring 128 is received within the sensor 190 to urge the sensor 190 and the valve stem 162 downwardly toward the lower housing 114. The adjustment screw 120 may be rotated to adjust the force of the load spring 128 upon the sensor 190 and the valve stem 162.

FIG. is an enlarged view of a portion of the main valve 160 circled in FIG. 1. The deformable valve member 164 is a unitary member mounted upon the valve stem 162. The deformable valve member 164 may be made of numerous nonmetal materials such as, for example, polychlorotrifluoroethylene or PCTFE (Neoflon™) or polytetrafluoroethylene (Teflon®), which may deform substantially when engaging the valve seat 166. The deformable valve member 164 engages the valve seat 166 to close the passage 167 and prevent fluid flow therethrough. The valve seat 166 includes a first diameter surface 166A that has a corner 170 and extends radially outwardly to a larger diameter second surface 166B. As illustrated in FIG. 2, the larger diameter second surface 166B is a flat angled surface offset from the first diameter surface 166A and disposed parallel to the flat angled surface 1648 of the deformable valve member 164. Alternatively, the larger diameter second surface 166B can be configured in other shapes such as, for example, one or more surfaces or corners similar to the first diameter surface 166A but offset from the first diameter surface 166A, one or more undulations offset from the first diameter surface 166A, or other shapes winch are offset from the first diameter surface 166A.

In operation, the example fluid flow regulator valve 100 receives high pressure fluid or gas such as, for example, hydrogen chloride, at the inlet 130. Initially, the fluid flow regulator valve 100 is closed because the adjuster screw 120 is retracted upwardly such that the load spring 128 permits the valve spring 155 to displace the valve stem 162 upwardly. The deformable valve member 164 engages the valve seat 166 (see FIG. 2) to close the main valve 160. When the adjustment screw 130 is rotated and advanced downwardly, the load spring 128 exerts a downward force on the sensor 190 and the valve stem 162 to displace the deformable valve member 164 away from the valve seat 166 and permit gas to flow through the passage 167 of the main valve 160. When the passage 167 is open, gas flowing into the inlet chamber 132 passes through the passage 167, to the stem cap 168, and through the lateral openings 169 and the passage 142 to the outlet 140.

The example fluid flow regulator valve 100 accomplishes the regulated flow of a fluid or gas at a desired pressure. If a greater than desired pressure of gas flows through the main valve 160, the downstream pressure of the gas (e.g., at the outlet 140) will increase and produce an increase in the gas pressure exerted upon the sensor 190. The increased gas pressure causes the sensor 190 and the attached valve stem 162 to move upwardly so that the deformable valve member 164 moves into engagement with the valve seat 166 and closes the main valve 160. More particularly, the sensor 190 and the attached valve stem 162 are urged upwardly by the increased pressure and cause the deformable valve member 164 to engage the first diameter surface 166A of the valve seat 166 (see FIG. 2). The engagement of the deformable valve member 164 with the first diameter surface 166A closes the passage 167.

However, in the event that particles such as, for example, metal filings, are introduced into the example fluid flow regulator valve 100 during or after manufacture of the valve 100, such particles may prevent the full closure of the passage 167. The presence of contaminants such as, for example, metal filings can result in the gas continuing to flow through the passage 167 and result in a continued increase in the downstream gas pressure. The continued increase in the downstream gas pressure results in increased the gas pressure against the sensor 190. As the sensor 190 is forced upwardly by the increased gas pressure, the valve member 164 engages the first diameter surface 166A with force greater than that which normally occurs during the operation of the example fluid flow regulator valve 100. The valve seat 166 can accommodate such greater engagement force of the deformable valve member 164 with the first diameter surface 166A. As the deformable valve member 164 moves upwardly against the first diameter surface 166A, the deformable member 164 reforms to receive therein the first diameter surface 166A until the flat angled surface 164B engages simultaneously the larger diameter second surface 166B. The flat angled surface 164B and the larger diameter second surface 166B are generally parallel to one another and, thus, their engagement results in a substantially uniform distribution of the forces exerted by the flat angled surface 164B upon the larger diameter second surface 166B. The substantially uniform distribution of the forces prevents the deformable valve member 164 from being damaged such that the valve member 164 could not close the passage 167. If the valve member 164 was damaged to the extent that the gas were to continue to flow through the passage 167, the example fluid flow regulator valve 100 could produce significant shifts or downstream pressure in the gas flow. Thus, the simultaneous engagement of the flat angled surface 164B with the first diameter surface 166A and the larger diameter second surface 166B prevents damage to the valve member 164 and the resulting undesirable flow of fluid or gas through the example fluid flow regulator valve 100.

If other conditions were to exist that could result in damage to the main valve 160 of the example regulator valve 100, such as, for example, the fluid pressure communicated to the inlet 130 being greater than that which is normally received by the example fluid flow regulator valve 100, or the main valve 160 being subjected to excessive cycling, the deformable valve member 164 can deform as described above to prevent such damage.

Although certain example apparatus have been described herein, the scope of coverage of this patent is not limited thereto. On the contrary, this patent covers all methods, apparatus and articles of manufacture fairly felling within the scope of the appended claims either literally or under the doctrine of equivalents.

## Claims

1. Apparatus (100) to regulate fluid flow, comprising:
a housing (114) having an inlet (130) and an outlet (140);
a valve seat (166) at a valve passage (167), the valve seat (166) defining a first diameter surface (166A), the first diameter surface having a corner (170) and extending radially outwardly to a larger diameter second surface (166B), wherein the second surface is angled relative to the first diameter surface; and
a valve member including a stem moveable in a first direction by an adjustable resilient member;
the valve member movable to engage the valve seat (166), the valve member having a deformable member (164) arranged to first engage and deform against the corner and the first diameter surface (166A) of the valve seat (166), the deformable member arranged to next engage and deform against the second surface (166B), wherein the deformable member (164) has a surface (164B) substantially parallel to the second surface (166B) of the valve seat (166);
**characterized in that** the deformable member (164) is disposed between the inlet and the valve seat,
and **in that** the apparatus (100) further comprises a sensor (190) on which is attached the valve stem (162), the sensor (190) being forced in a second direction opposite to the first direction by the gas pressure at the outlet (140) so that the deformable member (164) is urged against the valve seat (166) with greater force in response to an increase in the pressure at the outlet when the valve passage (167) is partially closed.

2. Apparatus as defined in claim 1, wherein the second surface is offset from the first diameter surface.

3. Apparatus as defined in claim 1, wherein the engagement of the deformable member with the second surface enables a substantially uniform transfer of forces from the deformable member to the second surface.

4. Apparatus as defined in claim 1, wherein the apparatus is a pressure regulator valve.

5. Apparatus as defined in claim 1, further comprising through openings (184) providing fluid communication between the outlet (140) and a chamber (113) containing the sensor (190).

6. Apparatus as defined in claim 5, wherein the sensor (190) further comprises a sensor flange (192) arranged to move within the chamber (113) and a diaphragm (200) extending between the sensor flange (192) and a valve guide (180) for the valve (164), wherein the through openings (184) provides fluid communication into a region at least partly encompassed by the diaphragm (200).

## Patentansprüche

1. Vorrichtung (100) zum Regeln eines Fluiddurchflusses, Folgendes umfassend:
ein Gehäuse (114) mit einem Einlass (130) und einem Auslass (140);
einen Ventilsitz (166) an einem Ventildurchgang (167), wobei der Ventilsitz (166) eine erste Durchmesserfläche (166A) definiert, wobei die erste Durchmesserfläche eine Ecke (170) hat und sich radial nach außen zu einer zweiten Fläche (166B) größeren Durchmessers erstreckt, wobei die zweite Fläche in Bezug auf die erste Durchmesserfläche abgewinkelt ist; und
ein Ventilteil, das einen Schaft umfasst, der durch ein einstellbares flexibles Teil in eine erste Richtung bewegt werden kann;
wobei das Ventilteil beweglich ist, um am Ventilsitz (166) anzugreifen, wobei das Ventilteil ein verformbares Teil (164) besitzt, das dazu eingerichtet ist, zuerst an der Ecke und der ersten Durchmesserfläche (166A) des Ventilsitzes (166) anzugreifen und sich zu verformen, wobei das verformbare Teil dazu eingerichtet ist, als Nächstes an der zweiten Fläche (166B) anzugreifen und sich zu verformen, wobei das verformbare Teil (164) eine Fläche (164B) besitzt, die im Wesentlichen parallel zur zweiten Fläche (166B) des Ventilsitzes (166) ist;
**dadurch gekennzeichnet, dass** das verformbare Teil (164) zwischen dem Einlass und dem Ventilsitz vorgesehen ist,
und dass die Vorrichtung (100) darüber hinaus einen Fühler (190) umfasst, auf dem der Ventilschaft (162) angebracht ist, wobei der Fühler (190) durch den Gasdruck am Auslass (140) in eine zur ersten Richtung entgegengesetzte Richtung getrieben wird, so dass das verformbare Teil (164) im Ansprechen auf eine Zunahme des Drucks am Auslass mit größerer Kraft gegen den Ventilsitz (166) gedrückt wird, wenn der Ventildurchgang (167) teilweise geschlossen ist.

2. Vorrichtung nach Anspruch 1, wobei die zweite Fläche von der ersten Durchmesserfläche versetzt ist.

3. Vorrichtung nach Anspruch 1, wobei der Angriff des verformbaren Teils an der zweiten Fläche eine im Wesentlichen gleichmäßige Kräfteübertragung vom verformbaren Teil auf die zweite Fläche ermöglicht.

4. Vorrichtung nach Anspruch 1, wobei es sich bei der Vorrichtung um ein Druckregelventil handelt.

5. Vorrichtung nach Anspruch 1, darüber hinaus Durchgangsöffnungen (184) umfassend, die eine Fluidverbindung zwischen dem Auslass (140) und einer den Fühler (190) enthaltenden Kammer (113) bereitstellen.

6. Vorrichtung nach Anspruch 5, wobei der Fühler (190) darüber hinaus einen Fühlerflansch (192), der dazu eingerichtet ist, sich in der Kammer (113) zu bewegen, und eine Membran (200) umfasst, die sich zwischen dem Fühlerflansch (192) und einer Ventilführung (180) für das Ventil (164) erstreckt, wobei die Durchgangsöffnungen (184) eine Flüssigkeitsverbindung in einem Bereich bereitstellen, der zumindest teilweise von der Membran (200) umschlossen ist.

## Revendications

1. Dispositif (100) apte à réguler l'écoulement d'un fluide, comprenant :
- un logement (114) possédant une entrée (130) et une sortie (140) ;
- un siège de soupape (166) dans le passage d'une soupape (167), le siège de soupape (166) définissant une première surface de diamètre (166A), la première surface de diamètre possédant un coin (170) et s'étendant radialement vers l'extérieur jusqu'à une seconde surface de diamètre (166B), dans lequel la seconde surface est inclinée par rapport à la première surface de diamètre ; et
- un élément de soupape comprenant une tige déplaçable selon une première direction par un élément élastique réglable ;
- l'élément de soupape étant apte à se déplacer pour s'emboiter dans le siège de soupape (166), l'élément de soupape possédant un élément déformable (164) agencé de manière à tout d'abord s'emboiter dans et se déformer contre le coin et la première surface de diamètre (166A) du siège de soupape (166), l'élément déformable étant agencé de manière à, par la suite, s'emboiter dans et se déformer contre la seconde surface (166B), dans lequel l'élément déformable (164) possède une surface (164B) sensiblement parallèle à la seconde surface (166B) du siège de soupape (166) ;
**caractérisé en ce que** l'élément déformable (164) est disposé entre l'entrée et le siège de soupape,
et **en ce que** le dispositif (100) comprend en plus un capteur (190) auquel la tige (162) de la soupape est attachée, le capteur (190) étant contraint dans une seconde direction, opposée à la première direction, par la pression du gaz à la sortie (140) de telle sorte que l'élément déformable (164) est pressé contre le siège de soupape (166) avec une force plus grande suite à une augmentation de la pression à la sortie lorsque le passage de soupape (167) est partiellement fermé.

2. Dispositif selon la revendication 1, dans lequel la seconde surface est décalée par rapport à la première surface de diamètre.

3. Dispositif selon la revendication 1, dans lequel l'emboitement de l'élément déformable dans la seconde surface permet un transfert de forces sensiblement uniforme depuis l'élément déformable vers la seconde surface.

4. Dispositif selon la revendication 1, dans lequel le dispositif est une soupape de régulation de pression.

5. Dispositif selon la revendication 1, comprenant en plus des orifices traversants (184) permettant une communication du fluide entre la sortie (140) et une chambre (113) contenant le capteur (190).

6. Dispositif selon la revendication 5, dans lequel le capteur (190) comprend en plus une collerette de capteur (192) agencée de manière à se déplacer à l'intérieur de la chambre (113) et un diaphragme (200) s'étendant entre la collerette de capteur (192) et un guide de soupape (180) pour la soupape (164), dans lequel les orifices traversants (184) permettent une communication du fluide avec une région au moins partiellement englobée par le diaphragme (200).
